# EUROPÄISCHE PATENTSCHRIFT

(11) **EP 3 839 255 B1**
(45) Veröffentlichungstag und Bekanntmachung des Hinweises auf die Patenterteilung: **02.03.2022**
(21) Anmeldenummer: 19218312.7
(22) Anmeldetag: 19.12.2019
(51) Int. Cl.: F04B 1/26, F04B 49/06, F04B 49/10, G01D 5/14

(54) **AXIALKOLBENPUMPE**
AXIAL PISTON PUMP
POMPE À PISTON AXIAL

(43) Veröffentlichungstag der Anmeldung: 23.06.2021
(73) Patentinhaber: Contelec AG, 2503 Biel/Bienne (CH)
(72) Erfinder: Amstutz, Meric, 2562 Port (CH); Bachmann, Rolf, 3292 Busswil BE (CH)
(74) Vertreter: Jakelski & Althoff Patentanwälte PartG mbB

(56) Entgegenhaltungen:
- DE-A1- 3 423 722
- DE-A1- 4 015 006
- DE-A1-102008 052 804
- DE-U1-202009 008 372
- US-A1- 2002 118 011

## Beschreibung

### Axialkolbenpumpe

Die vorliegende Erfindung betrifft eine Axialkolbenpumpe, an deren Taumelplatte ein Magnetgeber angeordnet ist.

### Stand der Technik

Axialkolbenpumpen sind in der Hydraulik eingesetzte Geräte zur Umwandlung von mechanischer Energie in hydraulische Energie. Sie werden sowohl in industriellen Anwendungen, wie beispielsweise im Schwermaschinenbau und im Kunststoffmaschinenbau, als auch in mobilen Arbeitsmaschinen verwendet. Dabei wird zwischen Schrägachsenpumpen und Schrägscheibenpumpen unterschieden. Axialkolbenpumpen können ein konstantes oder variables Fördervolumen sowie eine konstante oder variable Förderrichtung aufweisen.

Ein weiterer Einsatzbereich von Axialkolbenpumpen ist die Verwendung in hydrostatischen Getrieben in Fahrzeugen. Dabei wird Leistung (Drehzahl und Drehmoment) über einen Öldruck von maximal 500 bar übertragen. Der Ölfluss ist dabei stufenlos regelbar, wodurch sich ein stufenlos verstellbares Getriebe mit sehr hoher Leistungsdichte ergibt. Typische Einsatzbereiche sind Bagger, Radlader, Traktoren, Pistenraupen, Mähdrescher und viele anderer Langsamfahrer. Um den Betrieb einer Axialkolbenpumpe zu überwachen, kann an einem beweglichen Element der Axialkolbenpumpe ein Magnet angebracht werden. Die Bewegung des Magneten kann dann durch einen Magnetfeldsensor überwacht werden, welcher an einem Gehäuse der Axialkolbenpumpe angebracht wird.

Die EP 0 343 581 A1 beschreibt das Anbringen einer Anzahl von Magneten, die auf einem Kolben der Axialkolbenpumpe in einer Richtung identisch zu der hin- und herbewegenden Bewegung des Kolbens in einer Linie angeordnet sind. Der Magnetfeldsensor erzeugt dann Pulssignale, deren Anzahl mit einer Anzahl von Magneten in Beziehung steht, die dem Sensor gegenüberliegen. Mittels einer Zähleinrichtung kann die Pulsanzahl gezählt werden, die durch den Sensor erzeugt wird. Dies macht es allerdings erforderlich, die Magnete fest in dem Kolben einzubauen.

Eine andere Möglichkeit, um eine Axialkolbenpumpe mittels eines Magnetfeldsensors zu überwachen, besteht darin, einen Magnetgeber an ihrer Taumelplatte anzubringen. Hierdurch kann die Winkelstellung der Taumelplatte ermittelt werden. Wenn die ferromagnetischen Kolben der Axialkolbenpumpe sich bewegen, fungieren sie dabei allerdings als Störquelle für das Magnetfeld des Magnetgebers. Fehljustierungen eines solchen Magnetgebers führen zu erheblichen Nichtlinearitäten.

In der DE 40 15 006 A1 wird ein Taumelscheibenkompressor mit einem Magnetfeldsensor beschrieben, welcher Bewegungen eines mit der Taumelscheibe verbundenen Permanentmagneten erfasst. Ein störender Einfluss eines magnetischen Leckflusses einer an dem Kompressor montierten Kupplungsspule auf das Messergebnis eines Förderleistungsdetektors wird durch geeignete Speisung der Kupplungsspule unterdrückt.

Die DE 20 2009 008 372 U1 beschreibt einen Magnetgeber mit zwei stirnseitig polarisierten Permanentmagneten, die auf einer Basisplatte aus magnetisch leitfähigem Stahlblech angeordnet sind.

Aus der DE 10 2008 052 804 A1 ist ein magnetischer Drehgeber bekannt, der aus einem kunststoffgebundenen anisotropen Hartferriten besteht. Er weist eine magnetische Vorzugsrichtung auf, die in bogenförmiger Richtung von der einen zur anderen Hälfte der zu einem stirnseitig vor dem Drehgeber fest angeordneten magnetischen Winkelsensor weisenden Stirnseite des Drehgebers verläuft.

In der US 2002/0118011 A1 wird ein Positionssensor zur Ermittlung einer linearen oder radialen Position beschrieben. Dieser umfasst zwei Metallplatten mit jeweils zwei Magneten, wobei ein Hall-Sensor zwischen den Metallplatten angeordnet ist.

Die DE 34 23 722 A1 beschreibt einen induktiver Näherungsschalter mit einem vor seiner aktiven Fläche stehenden Sensorfeld für einen permeablen Auslöser und mit einem Oszillator, dessen Schwingkreis einen topfförmigen Ferritschalenkern aufweist. Der Ferritschalenkern ist mit einem eine sättigungsempfindliche Stelleaufweisenden Joch kurzgeschlossen ist, welches zwischen zwei magnetisch in Reihe geschalteten Stabmagneten angeordnet ist.

Eine Aufgabe der Erfindung besteht darin, eine Möglichkeit bereitzustellen, eine Axialkolbenpumpe mittels eines Bauteils zu überwachen, das nachträglich an dieser angebracht werden kann, ohne dass die Überwachung hierbei durch die Bewegung der ferromagnetischen Kolben der Axialkolbenpumpe gestört wird. Außerdem soll das Bauteil weitgehend unempfindlich gegenüber Fehljustierungen sein.

### Offenbarung der Erfindung

Diese Aufgabe wird durch eine Axialkolbenpumpe gelöst, an deren Taumelplatte ein Magnetgeber angeordnet ist. Dieser weist mindestens zwei Permanentmagnete und eine Platte auf, die aus einem ferromagnetischen Material besteht. Insbesondere kann es sich bei dem ferromagnetischen Material um Stahl handeln. Die Permanentmagnete sind so auf der Platte angeordnet, dass sie jeweils einen magnetischen Pol der Platte zuwenden und dieser Pol jeweils zumindest teilweise von der Platte bedeckt wird. Vorzugsweise wird jeder Pol zumindest zu 80 % seiner Fläche von der Platte bedeckt. Besonders bevorzugt wird jeder Pol vollständig von der Platte bedeckt Die Abmessungen der Platte entsprechen in diesem Fall zumindest der Fläche, die von den Permanentmagneten aufgespannt wird. Die Platte kann jedoch auch größer sein.

Es hat sich gezeigt, dass bei Verwendung von mindestens zwei Magneten, vorzugsweise von genau zwei Magneten, deren Anordnung auf der Platte eine wesentliche Beeinträchtigung eines Magnetfeldsensors durch die Bewegung der Kolben einer Axialkolbenpumpe verhindert. Gleichzeitig kann ein derartiger Magnetgeber kompakt ausgeführt werden, sodass nur wenig Bauraum in der Axialkolbenpumpe verbraucht wird und er durch sein Gewicht auch keine Unwucht an der Taumelplatte verursacht.

Wenn genau zwei Permanentmagnete verwendet werden, sind die beiden Permanentmagnete vorzugsweise so angeordnet, dass ein Permanentmagnet der Platte seinen Südpol zuwendet und der andere Permanentmagnet der Platte seinen Nordpol zuwendet. Dies ermöglicht eine einfache Unterscheidung der beiden Permanentmagnete durch den Sensor, wodurch aufgrund einer eventuellen Fehljustierung des Magnetgebers auftretende Nichtlinearitäten leicht ausgeglichen werden können.

Um die Beeinflussung des Magnetfeldsensors durch die Kolben der Axialkolbenpumpe zu minimieren, ist es bevorzugt, dass ein Abstand zwischen den Permanentmagneten und der Platte jeweils maximal 500 µm, besonders bevorzugt maximal 100 µm beträgt. Dieser Abstand kann beispielsweise ein baulich bedingter Luftspalt zwischen den Permanentmagneten und der Platte sein, oder er kann von einem nicht ferromagnetischen Füllmaterial gefüllt sein, das gegebenenfalls auch dem Verkleben der Platte mit den Permanentmagneten dient. Besonders bevorzugt liegen beide Permanentmagnete jedoch lückenlos auf der Platte auf.

Die Dicke der Platte liegt bevorzugt im Bereich von 0,5 mm bis 1,2 mm, besonders bevorzugt im Bereich von 0,6 mm bis 1,0 mm und ganz besonders bevorzugt im Bereich von 0,7 mm bis 0,9 mm. Ist die Platte dünner, so kommt es zu einer stärkeren Beeinflussung des Magnetfeldsensors durch die Bewegung der Kolben der Axialkolbenpumpe. Eine dickere Platte bewirkt keine wesentliche Verbesserung der Abschirmung gegenüber den Störeffekten der Kolbenbewegung mehr. Stattdessen kommt es lediglich zu einer Vergrößerung der Bauform und einer Erhöhung des Gewichts des Magnetgebers.

Um ein Kurzschließen der Permanentmagnete auszuschließen, ist es bevorzugt, dass alle Oberflächen der Permanentmagnete, welche nicht die Platte kontaktieren, von mindestens einem nicht ferromagnetischen Material umgeben sind. Die Platte kann insofern also grundsätzlich auch Wölbungen aufweisen, sofern dies nicht dazu führt, dass sie sich zwischen die Permanentmagnete erstreckt. Das nicht ferromagnetische Material ist insbesondere ein Kunststoff.

In einer besonders einfachen Ausführungsform der Axialkolbenpumpe sind die Permanentmagnete ohne Zuhilfenahme eines zusätzlichen Bauteils auf der Platte befestigt. Um sie mit einem nicht ferromagnetischen Material zu umgeben, bei dem es sich nicht lediglich um Luft handelt, können sie dann beispielsweise mit einer Vergussmasse umspritzt werden. Bevorzugt weist der Magnetgeber jedoch ein Gehäuse aus einem nicht ferromagnetischen Material auf. Dieses weist zwei Ausnehmungen auf, in denen die Permanentmagnete angeordnet sind. Die Ausnehmungen sind durch die Platte abgedeckt. Dies ermöglicht eine einfache Fertigung des Magnetgebers, indem die Permanentmagnete in die Ausnehmungen des Gehäuses eingesetzt werden und diese anschließend durch Anbringen der Platte am Gehäuse geschlossen werden. Grundsätzlich kann das Gehäuse auch weitere fertigungsbedingte Ausnehmungen aufweisen, die nicht zur Aufnahme von Permanentmagneten dienen.

Um den Magnetgeber an der Taumelplatte anzubringen, ist es bevorzugt, dass das Gehäuse mindestens ein Befestigungselement aufweist. Dieses Befestigungselement ist zur Befestigung an der Taumelplatte eingerichtet. Um eine Fehljustierung des Magnetgebers auszuschließen, ist es dabei bevorzugt, dass das Gehäuse mehrere Befestigungselemente aufweist. Das mindestens eine Befestigungselement ist auf derselben Seite des Gehäuses angeordnet wie die Platte. Da das Befestigungselement beim Anbringen des Magnetgebers an der Taumelplatte der Taumelplatte zugewandt wird, führt dies dazu, dass die Platte dem Kolben der Axialkolbenpumpe zugewandt wird, sodass sie die Permanentmagnete von den Kolben der Axialkolbenpumpe abschirmen kann.

Die Axialkolbenpumpe weist mehrere Kolben auf. Der Magnetgeber ist an einer Taumelplatte der Axialkolbenpumpe angeordnet. Weiterhin weist die Axialkolbenpumpe einen Magnetfeldsensor, insbesondere einen Hallsensor auf. Dieser ist so angeordnet, dass er dem Magnetgeber zugewandt ist. Wenn sich der Winkel der Taumelplatte gegenüber einem Pumpenschaft ändert, so verursacht dies eine Bewegung des Magnetgebers relativ zum Magnetfeldsensor, die mittels des Magnetfeldsensors detektiert werden kann. Aus dieser Bewegung ist ein Rückschluss auf den Winkel der Taumelplatte und damit auf den Betriebszustand der Axialkolbenpumpe möglich.

Die Platte ist vorzugsweise so zwischen dem Magnetfeldsensor und den Kolben der Axialkolbenpumpe angeordnet, dass die Platte dem Kolben zugewandt ist. Die Permanentmagnete sind dann dem Magnetfeldsensor zugewandt. Dadurch kann die Platte die Permanentmagnete sowie den Magnetfeldsensor gegenüber den Kolben abschirmen.

In einer Position der Taumelplatte ist die Platte des Magnetfeldsensors vorzugsweise parallel zu den Kolben angeordnet. Dies kann insbesondere eine Ruheposition der Taumelplatte sein, in welcher diese in einem bekannten vorgegebenen Winkel zu dem Pumpenschaft steht. Durch diese Anordnung des Magnetfeldsensors ist eine besonders einfache und zuverlässige Ermittlung des Winkels der Taumelplatte möglich. Weiterhin ist es bevorzugt, dass die Längsachsen beider Permanentmagnete in einer Position der Taumelplatte parallel zu den Kolben angeordnet sind. Bei dieser Position handelt es sich wiederum insbesondere um eine Ruheposition der Taumelplatte. Diese Anordnung der Permanentmagnete minimiert den Einfluss der Kolben auf die Positionsbestimmung des Magnetgebers durch den Magnetfeldsensor.

### Kurze Beschreibung der Zeichnungen

Ausführungsbeispiele der Erfindung sind in den Zeichnungen dargestellt und in der nachfolgenden Beschreibung näher erläutert.
Fig. 1a und 1b zeigt jeweils eine isometrische Ansicht eines Gehäuses eines Magnetgebers gemäß einem Ausführungsbeispiel der Erfindung.
Fig. 2 zeigt eine isometrische Darstellung eines Magnetgebers gemäß einem Ausführungsbeispiel der Erfindung mit entfernter Platte.
Fig. 3 zeigt eine isometrische Darstellung eines Magnetgebers gemäß einem Ausführungsbeispiel der Erfindung.
Fig. 4 zeigt eine schematische Schnittdarstellung eines Magnetgebers gemäß einem Ausführungsbeispiel der Erfindung.
Fig. 5 zeigt eine schematische Darstellung von Elementen einer Axialkolbenpumpe.
Fig. 6 zeigt in einer schematischen Schnittdarstellung die Anordnung eines Magnetgebers in einer Axialkolbenpumpe in einem Ausführungsbeispiel der Erfindung.
Fig. 7 zeigt eine schematische Schnittdarstellung eines nicht erfindungsgemäßen Magnetgebers.
Fig. 8a und 8b zeigen in Diagrammen Änderungen der Linearität bei Fehljustierung eines Magnetgebers an einer Taumelplatte.
Fig. 9 zeigt eine isometrische Darstellung eines anderen nicht erfindungsgemäßen Magnetgebers.

### Ausführungsbeispiele der Erfindung

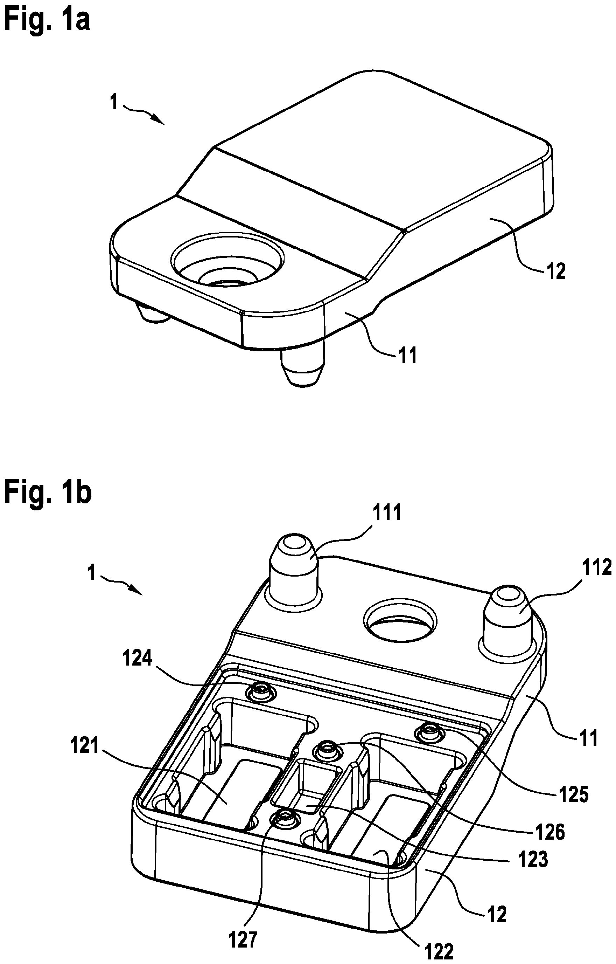

In den Fig. 1a und 1b ist ein Gehäuse 1 eines Magnetgebers gemäß einem Ausführungsbeispiel der Erfindung dargestellt. Dieses Gehäuses 1 besteht aus Zink und kann mittels Druckguss hergestellt werden. Es ist in einen ersten Abschnitt 11 und einem zweiten Abschnitt 12 unterteilt, die einstückig miteinander verbunden sind. Das Gehäuse 1 ist in Fig. 1a von seiner Oberseite und in Fig. 1b von seiner Unterseite dargestellt. Der erste Abschnitt 11 ist dünner als der zweite Abschnitt 12, wobei der zweite Abschnitt 12 gegenüber dem ersten Abschnitt 11 in Richtung der Oberseite des Gehäuses 1 vorspringt. Der erste Abschnitt 11 weist an der Unterseite zwei Befestigungselemente 111, 112 in Form von Stiften auf. Diese dienen zur positionsgenauen Justierung des Magnetgebers an einer Taumelplatte. Der zweite Abschnitt 12 ist zur Unterseite hin offen. Er weist zwei im Wesentlichen quaderförmige Ausnehmungen 121, 122 auf, deren Längsachsen parallel verlaufen und sich in Richtung zu dem ersten Abschnitt 11 hin erstrecken. Diese beiden Ausnehmungen 121, 122 sind zur Aufnahme von Permanentmagneten vorgesehen. Eine dritte Ausnehmung 123, die nicht zur Aufnahme eines Permanentmagneten vorgesehen ist, ist zwischen den ersten beiden Ausnehmungen 121, 122 angeordnet. Sie dient zur Herstellbarkeit des Gehäuses 1 in einem Druckgussverfahren. Vier Stifte 124 bis 127 sind im zweiten Abschnitt angeordnet und erstrecken sich von der Unterseite weg. Sie dienen dazu, das Gehäuse 1 mit einer Platte zu verbinden, welche die ersten beiden Ausnehmungen 121, 122 verschließt.

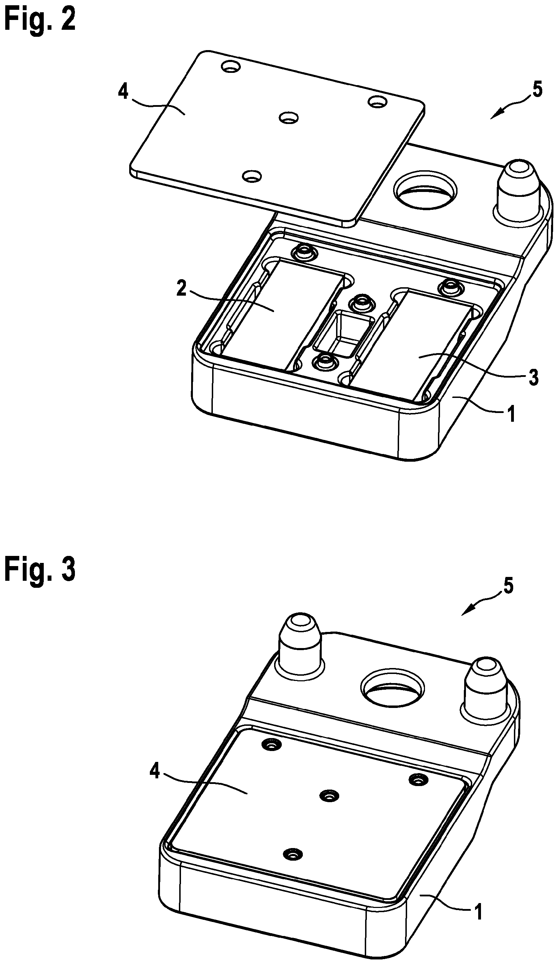

In Fig. 2 ist dargestellt, wie zwei Permanentmagnete 2, 3 in den beiden Ausnehmungen 121, 122 des Gehäuses 1 angeordnet werden können. Weiterhin ist eine Platte 4, die aus Stahl besteht, dargestellt. Diese weist vier Öffnungen auf, deren Positionen den Positionen der Stifte 124 bis 127 entsprechen. Das Gehäuse 1, die beiden Permanentmagnete 2, 3 und die Platte 4 bilden gemeinsam einen Magnetgeber 5 gemäß einem Ausführungsbeispiel der Erfindung.

In Fig. 3 ist der Magnetgeber 5 im zusammengebauten Zustand dargestellt. Die Platte 4 deckt nun alle Ausnehmungen 121 bis 123 im zweiten Abschnitt 12 des Gehäuses 1 ab. Sie ist so mit den Stiften 124 bis 127 verpresst, dass sie lückenlos auf den beiden Permanentmagneten 2, 3 aufliegt. Dabei bedeckt sie die beiden Permanentmagnete 2, 3 vollständig und erstreckt sich zudem über die von den Permanentmagneten 2, 3 aufgespannte rechteckige Fläche hinaus.

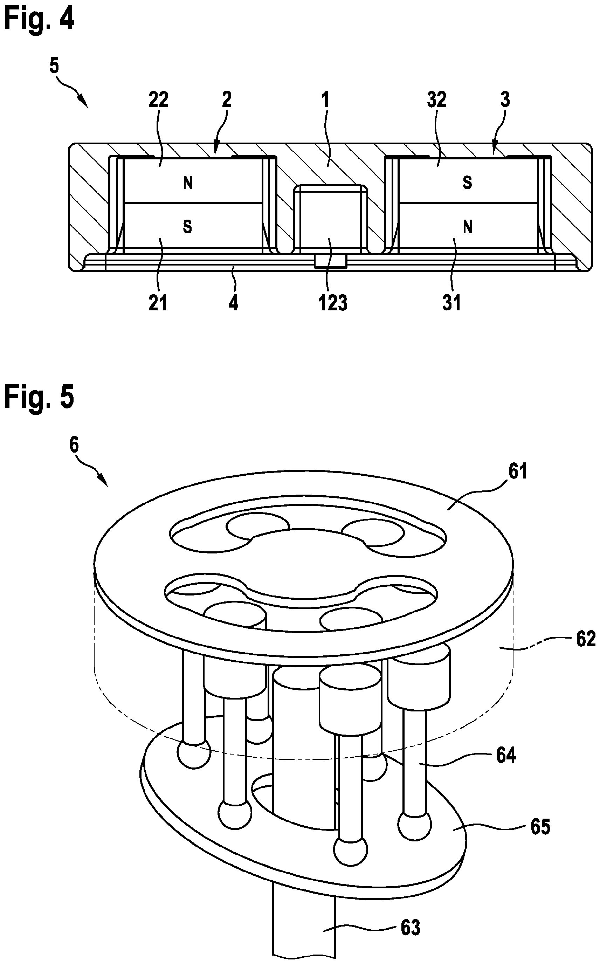

Ein Schnitt durch den Magnetgeber 5 quer zur Längsachse der Permanentmagnete 2, 3 ist in Fig. 4 dargestellt. Die Permanentmagnete 2, 3 sind jeweils so polarisiert, dass einer ihrer Pole der Platte 4 zugewandt ist und diese kontaktiert, während der andere Pol von der Platte 4 abgewandt ist und das Gehäuse 1 kontaktiert. Dabei ist der Südpol 21 des ersten Permanentmagneten 2 der Platte 4 zugewandt und sein Nordpol 22 ist von ihr abgewandt. Der Nordpol 31 des zweiten Permanentmagneten 3 ist der Platte 4 zugewandt und sein Südpol 32 ist von ihr abgewandt. Ausgenommen an der Unterseite des Magnetgebers 5, an welcher die Permanentmagnete 2, 3 die Platte 4 kontaktieren, sind die Permanentmagnete 2, 3 vom Zink des Gehäuses 1 umgeben.

Fig. 5 zeigt den Aufbau einer herkömmlichen Axialkolbenpumpe 6, die als Schrägscheibenpumpe ausgeführt ist. An einer Steuerscheibe 61 ist eine drehbare Trommel 62 angeordnet, welche über einen Pumpenschaft 63 in Rotation versetzt werden kann. Sie weist sechs Kolben 64 auf, die jeweils an einer schräg stehenden Taumelplatte 65 gelagert sind.

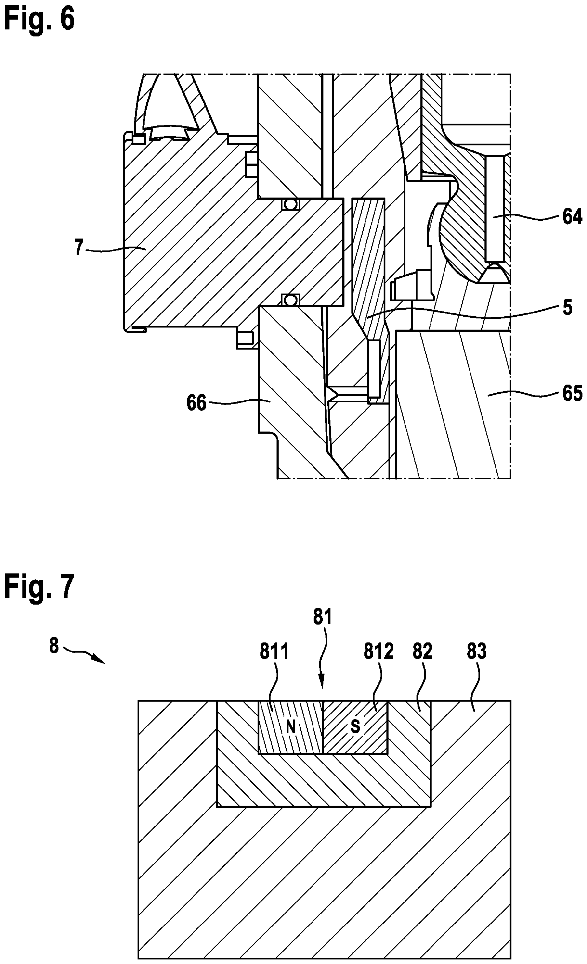

Fig. 6 zeigt, wie der Magnetgeber 5 gemäß dem voranstehend beschriebenen Ausführungsbeispiel an der Taumelplatte 65 angeordnet werden kann. Er wird dabei mit seinen Befestigungselementen 111, 112 so an der Taumelplatte 65 befestigt, dass die Unterseite seines zweiten Abschnitts 12 und die damit die Platte 4 den Kolben 64 zugewandt ist. Das Pumpengehäuse 66, welches die Elemente der Axialkolbenpumpe 6 umschließt, weist im Bereich des Magnetgebers 5 eine Öffnung auf, durch die ein Magnetfeldsensor 7 in Form eines Hallsensors geführt ist. Dieser ermöglicht es, Bewegungen der Permanentmagnete 2, 3 im Magnetgeber 5 zu erfassen und daraus auf den Winkel der Taumelplatte 65 gegenüber dem Pumpenschaft 63 zu schließen. Die Kolben 64, die aus ferromagnetischem Stahl bestehen, stören bei ihrer Bewegung das Magnetfeld der beiden Permanentmagnete 2, 3 nur minimal, da diese durch die Platte 4 gegenüber den Kolben 64 abgeschirmt sind. Zudem verlaufen die Längsachsen der Permanentmagnete 2, 3 im Magnetgeber 5 parallel zu den Längsachsen der Kolben 64.

Als Vergleichsbeispiel ist in Fig. 7 schematisch der Aufbau eines nicht erfindungsgemäßen Magnetgebers 8 dargestellt. Dieser weist einen einzigen Permanentmagneten 81 mit zwei Polen 811, 812 auf. Dabei liegt der Nordpol 811 an einem Ende der Längsachse des Permanentmagneten 81 und sein Südpol 822 liegt am anderen Ende seiner Längsachse. Während eine Seitenfläche des Permanentmagneten 81 offen liegt, sind seine weiteren Seitenflächen von einem nicht ferromagnetischen Kunststoff 82 umgeben. Dieser ist wiederum von einem Metallgehäuse 83 umgeben. Orthogonal zur Längsachse des Permanentmagneten 81 ist dieser durch den Kunststoff 82 um 4 mm von dem Metallgehäuse 83 beabstandet.

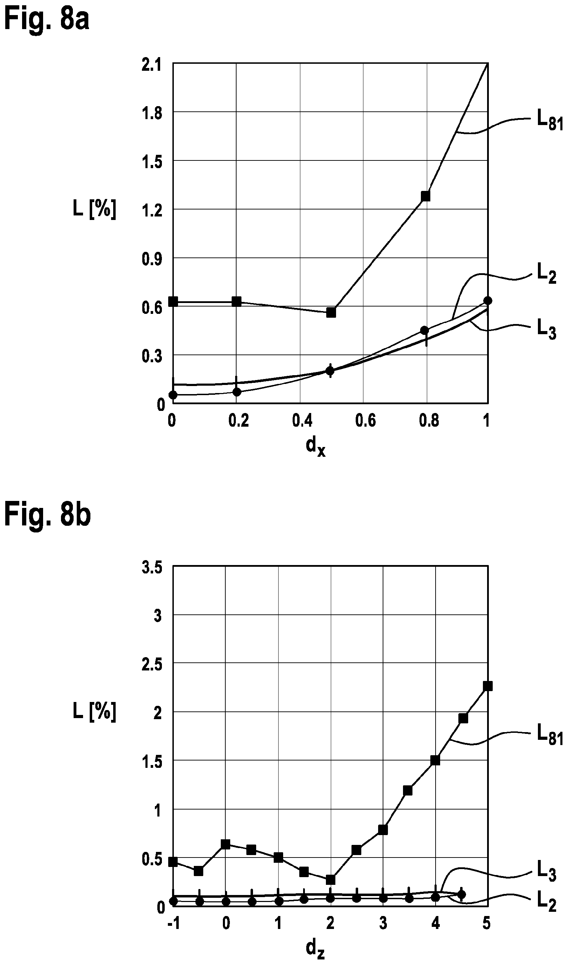

Änderungen der Linearitäten L des erfindungsgemäßen Magnetgebers 5 und des nicht erfindungsgemäßen Magnetgebers 8 bei Anordnung in einer Axialkolbenpumpe 6 in der in Fig. 6 dargestellten Weise sind in den Fig. 8a und 8b für unterschiedliche Fehljustierungen der Magnetgeber 5, 8 dargestellt. Dabei zeigt Fig. 8a den Einfluss von Fehljustierungen dₓ entlang der Ebene des Magnetgebers 5, 8 und Fig. 8b zeigt den Einfluss von Fehljustierungen d_{z} der Magnetgeber 5, 8 entlang einer Achse zwischen den Kolben 64 und dem Magnetfeldsensor 7. Da der erfindungsgemäße Magnetgeber 5 zwei Permanentmagnete 2, 3 aufweist, sind die Änderungen der Linearitäten L₂, L₃ für seine beiden Permanentmagnete 2, 3 aufgeführt, während für den nicht erfindungsgemäßen Magnetgeber 8 lediglich die Änderung der Linearität L₈₁ seines einzelnen Permanentmagneten 81 dargestellt ist. Es ist erkennbar, dass eine radiale Fehljustierung dₓ des erfindungsgemäßen Magnetgebers 5 zu erheblich geringeren Nichtlinearitäten führt als beim nicht erfindungsgemäßen Magnetgeber 8. Zudem ist der erfindungsgemäße Magnetgeber 5 im Wesentlichen unempfindlich gegenüber einem Versatz zwischen den Kolben 64 und dem Magnetfeldsensor 7, während der nicht erfindungsgemäße Magnetgeber 8 auch hierauf mit erheblichen Nichtlinearitäten reagiert.

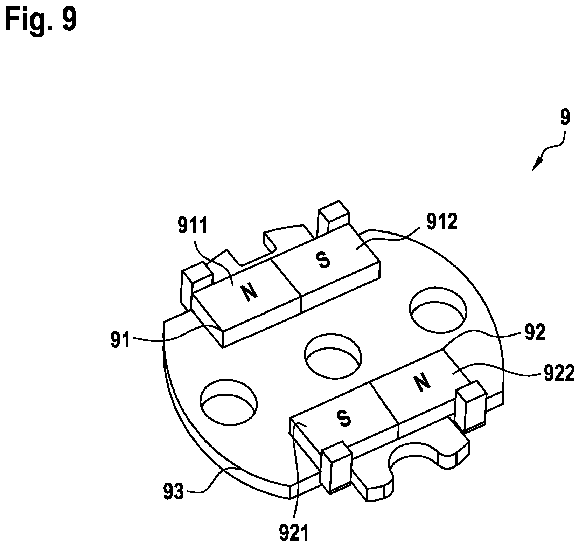

Als weiteres Vergleichsbeispiel ist in Fig. 9 der Aufbau eines nicht erfindungsgemäßen Magnetgebers 9 gemäß der DE 20 2009 008 372 U1 dargestellt. Dieser weist zwei parallel angeordnete Permanentmagneten 91, 92 mit jeweils zwei Polen 911, 912, 921, 922 auf. Dabei liegt der Nordpol 911 des ersten Permanentmagneten 91 an einem ersten Ende der Längsachse des ersten Permanentmagneten 91 und sein Südpol 912 liegt am zweiten Ende seiner Längsachse. Der Südpol 921 des zweiten Permanentmagneten 92 liegt am ersten Ende der Längsachse des zweiten Permanentmagneten 921 und sein Nordpol 922 liegt am zweiten Ende seiner Längsachse. Damit sind die beiden Permanentmagneten 91, 92 entgegengesetzt polarisiert. Die Permanentmagneten 91, 92 sind auf einer Platte 93 aus Stahlblech angeordnet.

Um den erfindungsgemäßen Magnetgeber 5 mit dem Magnetgeber 9 gemäß der DE 20 2009 008 372 U1 zu vergleichen, wurden Simulationen von zwei Magnetgebern durchgeführt, die jeweils zwei quaderförmige Permanentmagnete mit eine Länge von 16,25 mm in x-Richtung, einer Breite von 6,6 mm in y-Richtung und einer Höhe von 4,5 mm in z-Richtung aufweisen. Diese sind in y-Richtung in einem Abstand von 6,5 mm zueinander angeordnet und weisen jeweils eine nominale Remanenz von 1,1 T auf. Für den erfindungsgemäßen Magnetgeber wurde eine Polarisierung der Permanentmagnete in z-Richtung und für den nicht erfindungsgemäßen Magnetgeber in x-Richtung angenommen, wobei die beiden Permanentmagnete jeweils entgegengerichtet polarisiert waren. In einem Abstand von 6 mm in z-Richtung ergab sich für den erfindungsgemäßen Magnetgeber eine magnetische Flussdichte von 50 mT und für den nicht erfindungsgemäßen Magnetgeber eine magnetische Flussdichte von 1,1 µT. Ein Abstand von 6 mm ist in der Anordnung gemäß Fig. 6 zwischen dem Magnetgeber 5 und dem Magnetfeldsensor 7 baulich erforderlich. Für die Funktion des Magnetfeldsensors 7 wird eine magnetische Flussdichte im Bereich von 30 mT bis 90 mT am Magnetfeldsensor 7 empfohlen. Damit zeigt sich, dass der nicht erfindungsgemäße Magnetgeber 9 anders als der erfindungsgemäße Magnetgeber 5 nicht geeignet ist, um ihn durch Anbringen an einer Taumelplatte 65 zum Überwachen einer Axialkolbenpumpe 6 zu verwenden.

## Patentansprüche

1. Axialkolbenpumpe (6) mit mehreren Kolben (64), aufweisend einen Magnetgeber (5) der an einer Taumelplatte (65) angeordnet ist, sowie einen Magnetfeldsensor (7), der so angeordnet ist, dass er dem Magnetgeber (5) zugewandt ist, **dadurch gekennzeichnet, dass** der Magnetgeber (5) mindestens zwei Permanentmagnete (2, 3) und eine Platte (4) aufweist, die aus einem ferromagnetischen Material besteht, wobei die Permanentmagnete (2, 3) so auf der Platte (4) angeordnet sind, dass sie jeweils einen magnetischen Pol (21, 31) der Platte (4) zuwenden und dieser Pol (21, 31) jeweils zumindest teilweise von der Platte (4) bedeckt wird.

2. Axialkolbenpumpe (6) nach Anspruch 1, **dadurch gekennzeichnet, dass** der Magnetgeber (5) zwei Permanentmagnete (2, 3) aufweist und ein Permanentmagnet (2) der Platte (4) seinen Südpol (21) zuwendet und der andere Permanentmagnet (3) der Platte (4) seinen Nordpol (31) zuwendet.

3. Axialkolbenpumpe (6) nach Anspruch 1 oder 2, **dadurch gekennzeichnet, dass** ein Abstand zwischen den Permanentmagneten (2, 3) und der Platte (4) jeweils maximal 500 µm beträgt.

4. Axialkolbenpumpe (6) nach Anspruch 1 oder 2, **dadurch gekennzeichnet, dass** die Platte (4) eine Dicke im Bereich von 0,5 mm bis 1,2 mm aufweist.

5. Axialkolbenpumpe (6) nach einem der Ansprüche 1 bis 3, **dadurch gekennzeichnet, dass** alle Oberflächen der Permanentmagnete (2, 3), welche nicht die Platte kontaktieren, von mindestens einem nicht ferromagnetischen Material umgeben sind.

6. Axialkolbenpumpe (6) nach Anspruch 5, **dadurch gekennzeichnet, dass** der Magnetgeber (5) ein Gehäuse (1) aus einem nicht ferromagnetischen
Material aufweist, welches zwei Ausnehmungen (121, 122) aufweist, in denen die Permanentmagnete (2, 3) angeordnet sind, wobei die Ausnehmungen (121, 122) durch die Platte (4) abgedeckt sind.

7. Axialkolbenpumpe (6) nach Anspruch 6, **dadurch gekennzeichnet, dass** das Gehäuse (1) mindestens ein Befestigungselement (111, 112) zur Befestigung an der Taumelplatte (65) aufweist, wobei das Befestigungselement (111, 112) auf derselben Seite des Gehäuses (1) angeordnet ist, wie die Platte (4).

8. Axialkolbenpumpe (6) nach einem der Ansprüche 1 bis 7, **dadurch gekennzeichnet, dass** die Platte (4) so zwischen dem Magnetfeldsensor (5) und den Kolben (64) angeordnet ist, dass die Platte (4) den Kolben (64) zugewandt ist und die Permanentmagnete (2, 3) dem Magnetfeldsensor (7) zugewandt sind.

9. Axialkolbenpumpe (6) nach einem der Ansprüche 1 bis 8, **dadurch gekennzeichnet, dass** die Platte (4) in einer Position der Taumelplatte (65) parallel zu den Kolben (64) angeordnet ist.

10. Axialkolbenpumpe (6) nach einem der Ansprüche 1 bis 9, **dadurch gekennzeichnet, dass** die Längsachsen beider Permanentmagnete (2, 3) in einer Position der Taumelplatte (65) parallel zu den Kolben (64) angeordnet sind.

## Claims

1. Axial piston pump (6) having several pistons (64), having a magnetic encoder (5) arranged on a swash plate (65), and a magnetic field sensor (7) which is arranged in such a way that it faces towards the magnetic encoder (5), **characterised in that** the magnetic encoder (5) has at least two permanent magnets (2, 3) and a plate (4), which consists of a ferromagnetic material, wherein the permanent magnets (2, 3) are arranged on the plate (4) in such a way that they each faces a magnetic pole (21, 31) towards the plate (4), and this pole (21, 31) is at least partially covered by the plate (4) in each case.

2. Axial piston pump (6) according to claim 1, **characterised in that** the magnetic encoder (5) has two permanent magnets (2, 3), and one permanent magnet (2) faces its south pole (21) towards the plate (4), and the other permanent magnet (3) faces its north pole (31) towards the plate (4).

3. Axial piston pump (6) according to claim 1 or 2, **characterised in that** a distance between the permanent magnets (2, 3) and the plate (4) is in each case a maximum of 500µm.

4. Axial piston pump (6) according to claim 1 or 2, **characterised in that** the plate (4) has a thickness in the range of from 0.5 mm to 1.2 mm.

5. Axial piston pump (6) according to one of claims 1 to 3, **characterised in that** all surfaces of the permanent magnets (2, 3) which do not contact the plate are surrounded by at least one non-ferromagnetic material.

6. Axial piston pump (6) according to claim 5, **characterised in that** the magnetic encoder (5) has a housing (1) made of a non-ferromagnetic material, which has two recesses (121, 122) in which the permanent magnets (2, 3) are arranged, wherein the recesses (121, 122) are covered by the plate (4).

7. Axial piston pump (6) according to claim 6, **characterised in that** the housing (1) has at least one fastening element (111, 112) for fastening to the swash plate (65), wherein the fastening element (111, 112) is arranged on the same side of the housing (1) as the plate (4).

8. Axial piston pump (6) according to one of claims 1 to 7, **characterised in that** the plate (4) is arranged between the magnetic field sensor (5) and the pistons (64) in such a way that the plate (4) faces the piston (64) and the permanent magnets (2, 3) face the magnetic field sensor (7).

9. Axial piston pump (6) according to one of claims 1 to 8, **characterised in that** the plate (4) is arranged, in one position of the swash plate (65), parallel to the pistons (64).

10. Axial piston pump (6) according to one of claims 1 to 9, **characterised in that** the longitudinal axes of both permanent magnets (2, 3) are arranged, in one position of the swash plate (65), parallel to the pistons (64).

## Revendications

1. Pompe à pistons axiaux (6) dotée de plusieurs pistons (64), présentant un encodeur magnétique (5) disposé sur un plateau cyclique (65), ainsi qu'un capteur de champ magnétique (7) disposé de façon à être tourné vers l'encodeur magnétique (5), **caractérisée en ce que** le capteur magnétique (5) présente au moins deux aimants permanents (2, 3) et un plateau (4) composé d'un matériau ferromagnétique, lesdits aimants permanents (2, 3) étant disposés sur le plateau (4) de telle façon qu'un de leurs pôles magnétiques (21, 31) est respectivement tourné vers le plateau (4) et que ce pôle (21, 31) est au moins partiellement couvert par le plateau (4).

2. Pompe à pistons axiaux (6) selon la revendication 1, **caractérisée en ce que** l'encodeur magnétique (5) présente deux aimants permanents (2, 3), et l'un (2) des aimants permanents tourne son pôle sud (21) vers le plateau (4) et l'autre (3) des aimants permanents tourne son pôle nord (31) vers le plateau (4).

3. Pompe à pistons axiaux (6) selon la revendication 1 ou 2, **caractérisée en ce qu'**un écart respectif entre les aimants permanents (2, 3) et le plateau (4) fait au maximum 500 µm.

4. Pompe à pistons axiaux (6) selon la revendication 1 ou 2, **caractérisée en ce que** le plateau (4) présente une épaisseur située dans la plage de 0,5 mm à 1,2 mm.

5. Pompe à pistons axiaux (6) selon l'une des revendications 1 à 3, **caractérisée en ce que** toutes les surfaces des aimants permanents (2, 3) qui ne sont pas en contact avec la plaque sont entourées d'au moins un matériau non ferromagnétique.

6. Pompe à pistons axiaux (6) selon la revendication 5, **caractérisée en ce que** l'encodeur magnétique (5) présente un boîtier (1) composé d'un matériau non ferromagnétique et présentant deux évidements (121, 122) dans lesquels sont disposés les aimants permanents (2, 3), lesdits évidements (121, 122) étant couverts par le plateau (4).

7. Pompe à pistons axiaux (6) selon la revendication 6, **caractérisée en ce que** le boîtier (1) présente au moins un élément de fixation (111, 112) permettant une fixation à le plateau cyclique (65), ledit élément de fixation (111, 112) étant disposé du même côté du boîtier (1) que le plateau (4).

8. Pompe à pistons axiaux (6) selon l'une des revendications 1 à 7, **caractérisée en ce que** le plateau (4) est disposé entre le capteur de champ magnétique (5) et les pistons (64) de telle façon que ledit plateau (4) est tourné vers les pistons (64) et que les aimants permanents (2, 3) sont tournés vers le capteur de champ magnétique (7).

9. Pompe à pistons axiaux (6) selon l'une des revendications 1 à 8, **caractérisée en ce que** le plateau (4) est parallèle aux pistons (64) lorsque le plateau cyclique (65) se trouve dans une certaine position.

10. Pompe à pistons axiaux (6) selon l'une des revendications 1 à 9, **caractérisée en ce que** l'axe longitudinal de chacun des deux aimants permanents (2, 3) est parallèle aux pistons (64) lorsque le plateau cyclique (65) se trouve dans une certaine position.
